Europäisches Patentamt

European Patent Office

Office européen des brevets

(11) Numéro de publication: **0 247 951 B1**

## FASCICULE DE BREVET EUROPEEN

(45) Date de publication de fascicule du brevet:
24.07.91

(51) Int. Cl.⁵: **C01F 7/14**

(21) Numéro de dépôt: **87420125.4**

(22) Date de dépôt: **12.05.87**

(54) **Procédé et dispositif de décomposition de liqueur d'aluminate de sodium pour la production d'alumine.**

(30) Priorité: **15.05.86 FR 8607149**

(43) Date de publication de la demande:
**02.12.87 Bulletin 87/49**

(45) Mention de la délivrance du brevet:
**24.07.91 Bulletin 91/30**

(84) Etats contractants désignés:
**AT BE CH DE ES GB GR IT LI LU NL SE**

(56) Documents cités:
**EP-A- 0 184 526**
**EP-A- 0 195 732**
**DE-A- 3 206 110**
**FR-A- 451 593**
**US-A- 4 511 542**

(73) Titulaire: **ALUMINIUM PECHINEY**
**Immeuble Balzac 10, place des Vosges La Défense 5**
**F-92400 Courbevoie(FR)**

(72) Inventeur: **Grobelny, Henri**
**22 rue St. Jérôme Résidence Les Pins-Bât.4**
**F-13100 Aix-En-Provence(FR)**
Inventeur: **Chantriaux, Eric**
**Les Erbi ves - route de Puy Ricard**
**F-13100 Aix-en-Provence(FR)**

(74) Mandataire: **Pascaud, Claude et al**
**PECHINEY 28, rue de Bonnel**
**F-69433 Lyon Cédex 3(FR)**

## Description

### 1.DOMAINE TECHNIQUE DE L'INVENTION

La présente invention concerne un procédé et un dispositif de décomposition sans agitation des liqueurs sursaturées d'aluminate de sodium pour la production d'alumine par le procédé BAYER, qui constitue la technique essentielle de production de l'alumine principalement destinée à être transformée en aluminium par électrolyse ignée.

Selon ce procédé, la bauxite est traitée à chaud au moyen d'une solution aqueuse d'hydroxyde de sodium, à concentration appropriée, provoquant la solubilisation de l'alumine et l'obtention d'une solution sursaturée d'aluminate de sodium. Après séparation de la phase solide constituant le résidu inattaqué du minerai (boues rouges), la solution sursaturée d'aluminate de sodium est ensemencée avec du trihydroxyde d'aluminium faisant office d'amorce dans le but de provoquer la préoipitation du trihydroxyde d'aluminium.

Cette opération, communément appelée "décomposition" par l'homme de l'art, s'effectue généralement en plusieurs stades successifs qui se distinguent notamment par la température, la granulométrie et la quantité d'amorce introduite, le schéma de circulation des liqueurs dans les bacs successifs et les recyclages éventuels.

### 2. EXPOSE DU PROBLEME

La plupart des installations industrielles de production d'alumine effectuent cette décomposition en réacteurs appelés également décomposeurs agités. L'objectif est d'éviter toute perte de matière par accumulation des particules dans le fond des décomposeurs, mais surtout de conserver la plus grande homogénéité possible à la suspension. Ainsi, à l'augmentation près de la masse solide due à la réaction de décomposition, on réalise l'égalité des caractéristiques de la suspension contenue dans le décomposeur lui-même, à savoir : concentration en solides et granulométrie de ces solides. Une conséquence supplémentaire de l'agitation est l'égalité des distributions de temps de séjour dans le décomposeur pour la liqueur elle-même et pour les particules solides, et ceci indépendamment de la taille de ces particules.

Cette technologie de décomposeur agissant sur la circulation de la liqueur et des solides en suspension, et nécessitant de ce fait la mise en oeuvre d'une énergie d'agitation non négligeable, modifie simultanément certains paramètres conditionnant la cinétique de la réaction chimique de décomposition, donc la productivité de la liqueur, et également la qualité des solides précipités, notamment leur granulométrie finale.

Or, l'homme de l'art, pour obtenir industriellement une qualité d'alumine spécifique, définie par exemple par sa granulométrie, tout en conservant une productivité élevée et en limitant la consommation d'énergie, peut avoir intérêt à contrôler indépendamment les uns des autres certains paramètres non dissociables dans la technologie des décomposeurs agités et de ce fait difficile à optimiser, à savoir:
- la concentration des solides confinés au sein du décomposeur,
- la granulométrie de ces solides,
- la distribution des temps de séjour de la liqueur au sein du décomposeur,
- la distribution des temps de séjour des particules solides, que l'on peut souhaiter être différente de celle de la liqueur, mais aussi différente entre les particules suivant leur dimension.

C'est avec cette optique que plusieurs procédés ont été mis au point pour produire de l'alumine à gros grains, c'est-à-dire avec au maximum 10 % en poids de particules à l'état de trihydroxyde d'aluminium inférieures à 45 micrometres, et cela avec une productivité supérieure à 80 kg d'alumine précipitée par mètre cube de liqueur sursaturée.

### 3. ETAT DE LA TECHNIQUE ANTERIEURE

Certains procédés de précipitation d'alumine par décomposition d'une solution sursaturée d'aluminate de sodium en présence d'amorce, préconisent une étape de grossissement par augmentation du temps de séjour des particules d'amorce dans le décomposeur, au contact de la liqueur mère renouvelée. Ainsi, en limitant, voire en supprimant l'agitation, l'on crée dans la partie inférieure du décomposeur, par décantation des particules d'amorce, une zone à haute concentration en particules solides où s'effectue la précipitation d'alumine et le grossissement de ces particules au contact de la liqueur mère circulante.

Ces procédés de décomposition font partie des procédés de décomposition en phase dense avec accumulation ou encore rétention d'amorce.

Ainsi, les procédés US 3 607 113 et US 3 649 184 effectuent la décomposition de la liqueur sursaturée

2

d'aluminate de sodium en une seule étape en utilisant des décomposeurs à 2 compartiments. Dans le premier compartiment agité, qui reçoit la liqueur mère ainsi que l'amorce fine, s'effectuent l'agglomération des particules de trihydroxyde d'aluminium puis le grossissement des agglomérats qui s'accumulent à la partie inférieure du décomposeur dont ils sont extraits en discontinu, alors que la liqueur partiellement décomposée s'évacue par surverse vers le décomposeur suivant, après avoir traversé le deuxième compartiment, non agité, du décomposeur où s'effectue une rétention sélective des grains.

Les particules accumulées à la base de chaque décomposeur et sur lesquelles s'effectue uniformément la précipitation de la liqueur sont donc extraites en discontinu et constituent la production, après un cyclonage indispensable pour éliminer les plus fines particules qui sont recyclées avec la liqueur partiellement épuisée vers le premier compartiment de chaque décomposeur.

Le procédé US 4 364 919 réalise la décomposition de la liqueur d'aluminate de sodium en 2 étapes distinctes. La première étape d'agglomération est effectuée en bac agité en présence d'une faible quantité d'amorce classée. La deuxième étape de nourrissement et de grossissement des agglomérats est effectuée dans des bacs faiblement agités où le temps de séjour du solide est nettement supérieur à celui de la liqueur mère épuisée qui s'évacue par surverse. La concentration en particules solides peut atteindre de 400 g/l à 1500 g/l.

De même, US 4 511 542 effectue après une première phase de nucléation et d'agglomération des particules de trihydroxyde d'aluminium en présence d'une faible quantité d'amorce classée, un épaississement en solide de la suspension par accumulation dans une série de décomposeurs avec précipitation d'alumine. Les temps de séjours des particules de trihydroxyde d'aluminium varient de 30 à 90 heures et leur concentration de 250 à 700 g/litre. La suspension à haute concentration en matière sèche sortant du dernier décomposeur est classée en totalité pour fournir la production et l'amorce fine recyclée après lavage.

En fait, ces procédés ont en commun d'effectuer une rétention des grains au cours de la phase de décomposition dans laquelle la précipitation d'alumine s'effectue indifféremment sur tous les grains de trihydroxyde d'aluminium, quelle que soit leur taille. Cela se traduit donc par une précipitation d'alumine sur les grains fins et un appauvrissement prématuré de la solution mère, mais surtout par l'obligation de procéder dans une étape finale spécifique à un classement de la suspension pour séparer la production de l'amorce. Il n'y a donc pas de classement des particules en fonction de leur taille au cours de la décomposition, permettant, pour un seuil de coupure déterminé, de régler sélectivement le temps de séjour des grosses particules et d'éliminer rapidement les fines particules du milieu réactionnel.

Le procédé FR 1 187 352 qui décrit une technique de précipitation en lit fluide paraît résoudre ce problème. Il consiste à maintenir une suspension de cristaux ou de particules solides en équilibre dans un liquide ascendant. Dans un tel lit, les dimensions et les concentrations des particules solides vont en décroissant du bas vers le haut et la hauteur du lit fluide est fonction de la vitesse ascendante du liquide. Il est alors possible de régler avec précision le seuil de rétention des particules selon leur diamètre et par suite leur temps de séjour dans le réacteur en agissant uniquement sur la vitesse ascendante du liquide dont les caractéristiques doivent rester constantes. Si le liquide constitue lui-même le milieu réactionnel où s'effectue un transfert de matière liquide solide, il doit être renouvelé en permanence.

En fait, il est bien connu que dans son application industrielle et notamment pour la décomposition de solution d'aluminate de sodium, la mise en oeuvre puis le contrôle en continu d'un tel lit fluide sont très délicates. Cela, en raison de la grande instabilité du lit fluide qui même en régime établi est sensible aux moindres fluctuations des paramètres régissant l'écoulement hydrodynamique du liquide ainsi que la cinétique de précipitation : température, densité, viscosité, taille et forme des grains, etc...

Notre demande EP 0184526A montre qu'il est néanmoins possible d'adopter industriellement la technique du lit fluide à la décomposition de solution saturée d'aluminate de sodium et par conséquent de régler le temps de séjour des particules de trihydroxyde d'aluminium par une rétention vraiment sélective de ces particules selon leur taille. Pour cela, il convient d'effectuer la décomposition en plusieurs étapes bien distinctes. Dans la première étape d'agglomération réalisée en bac non agité, les particules d'amorce non classée traversent de haut en bas le bac non agité contenant la liqueur mère sursaturée. Les grosses particules ont un temps de séjour, donc une concentration, diminuée par rapport aux fines, ce qui, lié à l'absence de tout moyen d'agitation, va dans un sens très favorable à l'agglomération et à une régulation des tailles d'agglomérat. La mise en oeuvre et la stabilisation du lit dense dans la deuxième étape, au cours de laquelle s'effectuent la rétention sélective et le nourrissement des gros agglomérats, s'en trouvent facilitées. La suspension issue de la première étape de décomposition est injectée à la partie inférieure d'un décomposeur non agité, la faible vitesse de circulation de la liqueur permet aux gros agglomérats de rester dans la zone d'injection de la suspension, de grossir avec la précipitation d'alumine, enfin de décanter pour être éliminés en continu à la base du décomposeur et constituer directement la production.

la fraction de fines particules non agglomérées ou insuffisamment agglomérées est entraînée rapidement avec la liqueur non épuisée, par surverse. Cette dernière est dans une troisième et dernière étape, épuisée par précipitation en présence d'un apport d'amorce fine recyclée.

La maîtrise des paramètres quantitatifs et qualitatifs de précipitation de l'alumine à partir de solution d'aluminate de sodium sursaturée, implique en fait, là encore, des réglages très précis et délicats dans la mise en oeuvre et le contrôle simultané de 3 étapes de décomposition et plus particulièrement des 2 premières étapes qui conditionnent la stabilisation du lit fluide et l'efficacité de la rétention sélective.

## 4. OBJET DE L'INVENTION

Dans l'optique de mieux maîtriser individuellement et par suite d'optimiser les conditions de précipitation d'alumine par décomposition de solution sursaturée d'aluminate de sodium, la demanderesse a mis au point un procédé et un dispositif pour sa mise en oeuvre, selon lesquels on effectue simultanément, classement, rétention sélective et nourrissement des particules de trihydroxyde d'aluminium, en évitant ainsi :

- soit un classement après décomposition des particules pour la production et l'amorce, du fait de la croissance des gros grains retenus sélectivement et cela au détriment des particules fines entraînées à la surverse.
- soit une procédure de décomposition en 3 étapes sans classement spécifique, mais avec un précalibrage des agglomérats dans une première étape d'agglomération, puis un réglage très délicat du lit fluide pour réaliser simultanément dans une deuxième étape nourrissement et rétention sélective.

Plus précisément, un premier objet de l'invention est un procédé de décomposition en continu d'une liqueur d'aluminate de sodium sursaturée en alumine, provenant de l'attaque alcaline de bauxite selon le procédé BAYER et formant une suspension en présence d'amorce de trihydroxyde d'aluminium, caractérisé par les étapes suivantes :

a) on introduit ladite suspension constituant le flux d'alimentation, à la partie supérieure d'un réacteur ou décomposeur classant non agité, dans une zone de tranquillisation où ce flux d'alimentation est mis en contact, à une température comprise entre 45° et 70° C, avec une fraction d'une suspension à haute concentration en particules solides, constituant le flux de recyclage, prélevée à la partie inférieure du décomposeur classant dans une zone dite de souverse.

b) on soutire simultanément dans la zone de souverse du décomposeur classant non agité, une autre fraction de suspension à haute concentration en particules solides qui constituent directement le flux de production.

c) on extrait à la partie supérieure du décomposeur classant, la suspension à faible concentration en solide constituant le flux de surverse.

d) on règle pour un débit préalablement fixé du flux d'alimentation le débit du flux de recyclage, de telle sorte que :
- le débit de recyclage soit compris entre 2 fois et 7 fois le débit d'alimentation,
- la vitesse d'écoulement de la suspension dans la zone de souverse soit comprise entre 1 mètre et 10 mètres par heure,
- la vitesse de remontée de la suspension dans la zone de surverse soit comprise entre 0,5 et 5 mètres par heure.

Un second objet de la même invention est un dispositif appelé décomposeur classant pour la mise en oeuvre du procédé de décomposition, caractérisé en ce qu'il comporte :

a) un bac cylindro-conique dont la partie supérieure cylindrique est équipée d'une surverse avec une zone d'alimentation et de tranquillisation, constituée par exemple par une cheminée centrale partiellement immergée dans la suspension à traiter, et dont la partie inférieure conique située dans une zone dite de souverse est équipée à son extrémité d'une tuyauterie de soutirage reliée elle-même à une tuyauterie de sortie du flux de production.

b) des moyens de transfert de la suspension de la zone de souverse jusqu'à ladite zone d'alimentation et de tranquillisation, située à la partie supérieure du décomposeur classant.

Ainsi, selon l'invention, il est possible de régler indépendamment les uns des autres les principaux paramètres de décomposition des liqueurs d'aluminate de sodium en présence d'amorce de trihydroxyde d'aluminium.

1° - La distribution des temps de séjour des particules entrant dans le décomposeur déterminant la taille finale des grains pour la production, est donc réglée de façon à augmenter très fortement (5 à 10 fois) le temps de séjour des grosses particules par rapport à celui des particules de plus petites dimensions qui

4

sortent en surverse avec la liqueur partiellement décomposée. Ce temps de séjour est également plus élevé que ce qu'il serait dans un décomposeur agité. Cette rétention des grosses particules dans la zone de souverse permet, dans la mesure où elle est suffisamment sélective, de faire grossir préférentiellement ces particules par la réaction de décomposition de la liqueur environnante et par un dispositif adapté d'extraction en continu, d'obtenir directement la production calibrée souhaitée. Cet effet de rétention sélective de l'amorce est obtenu par la combinaison de 2 phénomènes et des dispositifs associés :

a) le classement des particules, selon leur dimension, par décantation dans leur suspension. Ce classement est réalisé dans un décomposeur cylindro-conique aménagé en décanteur, ce qui implique l'absence d'agitation et la présence d'une zone de tranquillisation des flux d'alimentation et de recyclage du décomposeur. Le classement des particules est réalisé par la division des flux d'alimentation et de recyclage entre un flux de souverse (somme des flux de recyclage et de production) contenant les particules grosses et un flux de surverse contenant les particules fines.

La qualité du classement est réglée par la concentration en solides du flux d'alimentation qui doit être inférieure à 200 g/litre sous forme de trihydroxyde d'aluminium et de préférence comprise entre 110 g/litre et 180 g/litre alors que la liqueur d'aluminate de sodium a une concentration en soude exprimée en $Na_2O$, comprise entre 100 g/litre et 200 g/litre avec un rapport pondéral Rp de concentration $Al_2O_3$ en solution/$Na_2O$ caustique compris entre 0,5 et 1,2.

Le classement est également réglé par la concentration en solide du flux à la souverse qui doit être compris entre 300 g/litre et 900 g/litre exprimé en trihydroxyde d'aluminium ainsi que par la vitesse de remontée de la suspension dans la zone de surverse qui doit être comprise entre 0,5 mètre et 5 mètres par heure, et de préférence entre 1 mètre et 3 mètres par heure.

b) l'épaississement en solides de la suspension dans la zone de souverse. Sans cet épaississement, la zone de souverse contiendrait une suspension dont la concentration en solides serait peu différente de celle du flux d'alimentation, et le temps de séjour moyen des particules sortant en souverse serait alors égal au rapport de la masse des solides contenus dans la zone de souverse au débit de solides sortant en souverse, c'est-à-dire égal au temps de séjour dans un décomposeur agité. Pour augmenter significativement ce temps de séjour, à volume de décomposeur et débit de souverse constants, il faut donc augmenter la masse de solides confinés au sein du décomposeur. Selon l'invention, ce but est atteint par réinjection au moyen d'une pompe interne ou externe au décomposeur, du flux de recyclage tiré de la souverse à forte concentration en solides (300 g/l à 900 g/l) dans la cheminée centrale du décomposeur. Ce recyclage conduit à un équilibre de concentration en solides dans la zone de souverse, dont la valeur est d'autant plus proche de celle du produit sortant en souverse, donc d'autant plus élevée, que la vitesse d'écoulement de la suspension dans cette zone est importante.

Pour un diamètre donné du décomposeur, le flux de recyclage est donc déterminant. La vitesse d'écoulement de la suspension dans cette zone de souverse doit être comprise entre 1 mètre et 10 mètres par heure et de préférence comprise entre 3 mètres et 8 mètres par heure. Le flux de recyclage compris entre 2 et 7 fois le flux d'alimentation et de préférence entre 2 et 3,5 fois le flux d'alimentation.

2° - La distribution des temps de séjour de la liqueur qui conditionne la productivité globale de cette même liqueur est réglée de façon à rendre voisins les temps de séjour des liqueurs de surverse et de souverse, ce qui maximise la productivité globale de la liqueur et pour cela 2 moyens sont utilisés :

a) le choix des volumes respectifs des zones de surverse et de souverse déterminés à la construction de l'appareil. Le rapport du volume de la zone de surverse au volume de la zone de souverse est généralement compris entre 0,1 et 0,5.

b) le flux de recyclage à la souverse du décomposeur qui doit être compris entre 2 et 7 fois le flux d'alimentation.

## 5. DESCRIPTION DES FIGURES

Les figures 1 et 2 illustrent, en coupe verticale schématique, le dispositif pour la mise en oeuvre de l'invention.

La figure 3 est un schéma général de mise en oeuvre de l'invention dans un procédé de décomposition dit à 3 phases décrit dans les exemples d'application 3 et 4.

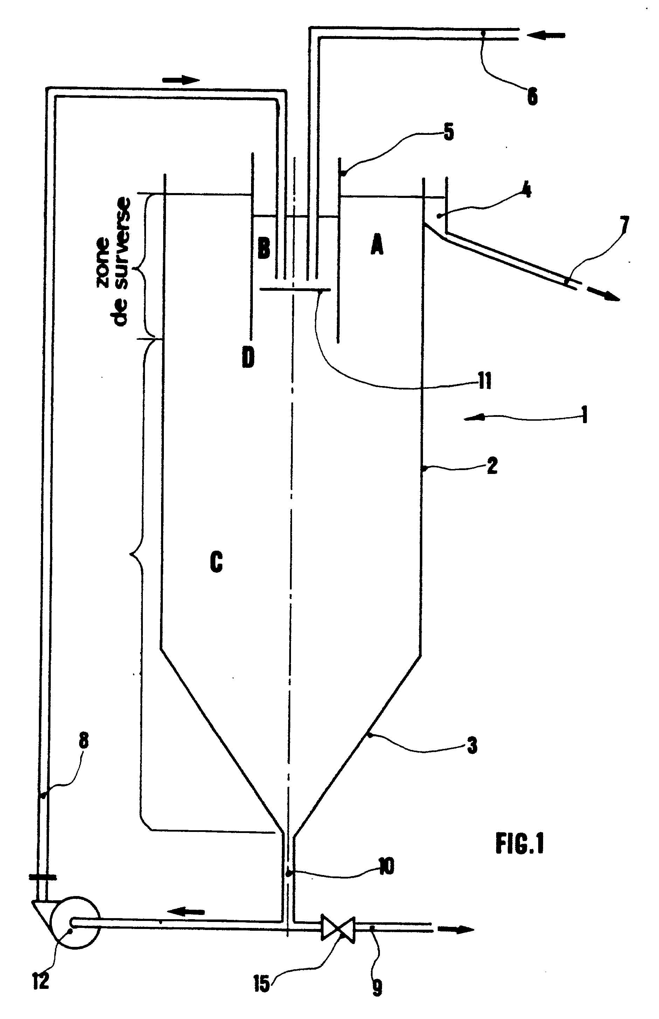

. La figure 1 représente un décomposeur classant avec recyclage externe par pompe centrifuge (12).

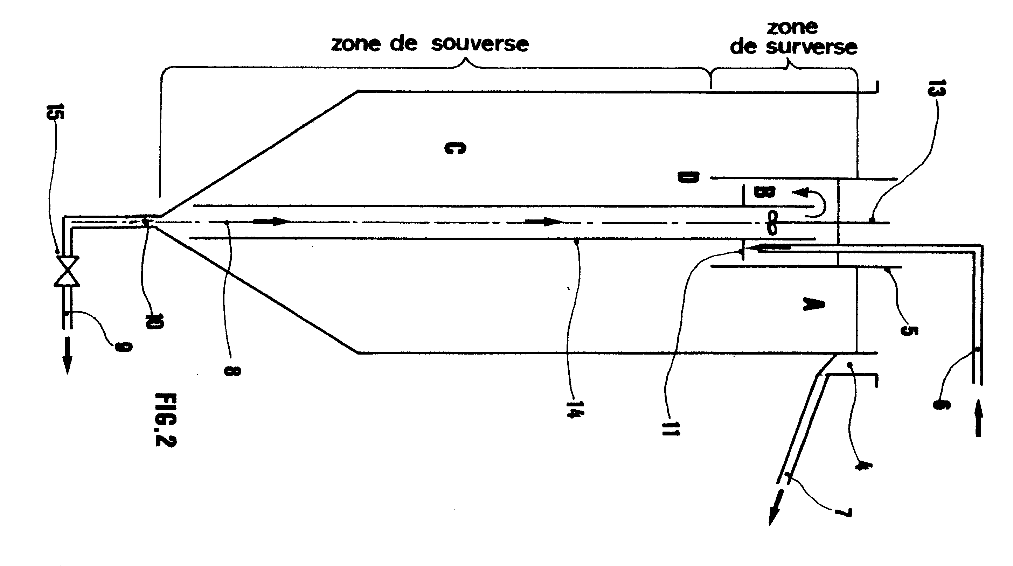

. La figure 2 représente une autre configuration avec recyclage interne par pompe hélice (13).

Le décomposeur classant est un bac (1) cylindro-conique, comportant une partie supérieure cylindrique (2) et un fond conique (3). Il est équipé d'une surverse (4) et d'une cheminée centrale (5) plongeant dans la

5

suspension d'hydroxyde d'aluminium.

La partie supérieure du bac est donc compartimentée en deux zones:
- une zone de surverse (A) comprise entre la cheminée et la virole cylindrique du bac.
- une zone d'alimentation (B) située à l'intérieur de la cheminée (5).

La partie inférieure du décomposeur est appelée zone de souverse (C). Le fonctionnement du bac est lié à 4 flux distincts :
- l'alimentation (6)
- la surverse (7)
- le recyclage (8)
- la production (9).

Dans la cheminée centrale arrivent la tuyauterie d'alimentation (6) et la tuyauterie de recyclage (8), les flux se mélangent et constituent l'alimentation du bac dans la zone (B).

Au niveau inférieur (D) de la cheminée centrale (5), le flux obtenu par le mélange alimentation (6) - recyclage (8), se scinde en deux pour alimenter la zone de surverse (A) et la zone de souverse (C).

Les deux tuyauteries arrivant dans la cheminée (5) sont immergées dans la zone (B) pour éviter tout risque d'émulsion et donc de perturbation des écoulements lents de la suspension dans la zone (D). Pour casser le jet, une tôle horizontale (11) ou tout autre dispositif disperseur statique est immergé dans la zone (B) à l'intérieur de la cheminée centrale (5), à quelques dizaines de centrimètres en dessous des tuyauteries d'arrivée des flux d'alimentation (6) et de recyclage (8) également immergés.

Dans la zone de souverse, deux flux sont extraits du fond du cône:
- le recyclage (8)
- et la production (9).

Sur la figure 1, ces deux flux sortent du décomposeur par la tuyauterie de soutirage (10) ; la tuyauterie de recyclage (8) est alors équipée d'une pompe centrifuge (12), refoulant dans la zone d'alimentation (B).

Sur la figure 2, le circuit de recyclage est interne, une pompe hélice (13) assure le débit de la suspension aspirée au fond du décomposeur grâce à un tube plongeur (14) refoulant dans cette même zone (B).

Par ces différents flux : alimentation, surverse, recyclage, production, on atteint un équilibre hydrodynamique en écoulement lent du type "piston" caractérisé par une concentration en solide et une granulométrie en zone de souverse et de surverse ainsi qu'un temps de séjour des solides et des liqueurs.

En cas d'arrêt d'alimentation, le bac est isolé par interruption du flux de production (9) par un moyen d'obturation (15), et la pompe de recyclage (12), figure 1, ou la pompe hélice (13) figure 2, assure un débit suffisant pour maintenir l'homogénéité de concentration en solides de la zone de souverse (C), et empêche ainsi tout risque de dépôt et de bouchage.

## 6. EXEMPLES D'APPLICATIONS

Les 2 premiers exemples d'application de l'invention concernent le fonctionnement du décomposeur proprement dit, selon 2 régimes de marche distincts réalisés dans une installation industrielle de production d'alumine.

. - Caractéristiques du décomposeur :
diamètre du bac : 9 m
diamètre de la cheminée : 3,15 m
volume utile : 1000 $m^3$
profondeur d'immersion de la cheminée : 3 m
volume de la zone de surverse/volume de la zone de souverse:0,2
. - Caractéristiques de la liqueur avant addition d'amorce :
aluminate de soude à 145 g/l de soude caustique
température : 65° C
. - Caractéristiques des suspensions des différents flux :
**Premier exemple :** (premier régime de marche)

| Alimentation | débit | :154 m³/h |
| | particules solides | :158 g/l |
| | Rp | :1,06 |
| | Granulométrie | :35 % < 48 μm |
| Surverse | débit | :132 m³/h |
| | particules solides | :138 g/l |
| | Rp | :0,95 |
| | granulométrie | :47 % < 48 μm |
| Recyclage | débit | :455 m³/h |
| Production | débit | :22 m³/h |
| | particules solides | :460 g/l |
| | Rp | :0,93 |
| | granulométrie | :9 % < 48 μm |

Vitesse de remontée de la suspension en zone de surverse : 2,4 m/h
Vitesse d'écoulement de la suspension en zone de souverse : 7,48 m/h
Grossissement du spectre granulométrique : 2 % de baisse de passant à 48 $\mu$ (différence de pourcentage massique des particules dont la taille est plus petite que 48 $\mu$ entre le flux d'alimentation et le mélange des flux de surverse et de production).

**Deuxième exemple :** (deuxième régime de marche)

| Alimentation | débit | : 112 m³/h |
| | particules solides | : 165 g/l |
| | Rp | : 1,3 |
| | granulométrie | : 38 % < 48 μm |
| Surverse | débit | : 98 m³/h |
| | particules solides | : 137,5 g/l |
| | Rp | : 0,877 |
| | granulométrie | : 54 % < 48 μm |
| Recyclage | Débit | : 355 m³/h |
| Production | Débit | : 14 m³/h |
| | particules solides | : 625 g/l |
| | Rp | : 0,860 |
| | granulométrie | : 5,5 % < 48 μm |

Vitesse de remontée de la suspension en zone de surverse : 1,75 m/h
Vitesse d'écoulement de la suspension en zone de souverse : 5,8 m/h
Grossissement du spectre granulométrique : 6 % de baisse de passant à 48 $\mu$m.

Les 3 exemples suivants d'application de l'invention concernent l'utilisation du décomposeur classant dans une boucle de décomposition.

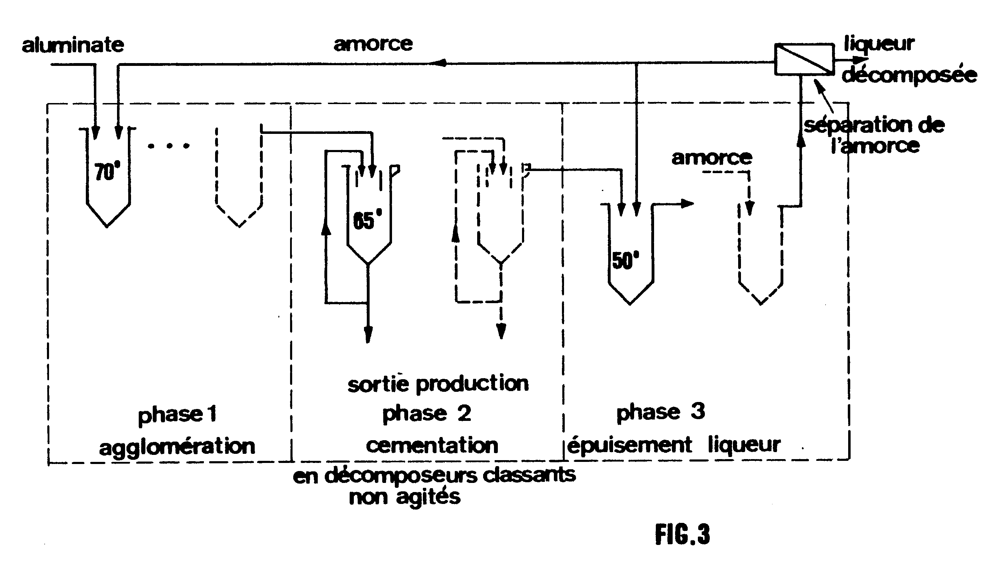

Dans les troisième et quatrième exemples, le décomposeur classant est mis en oeuvre dans un procédé dit "ACSPE" à 3 phases, qui comporte, en se référant à la figure 3 :

- une phase "A" d'agglomération des particules en suspension par concentrée en solides (repère phase 1),
- une phase "CSP" de cémentation des particules et de sortie production, dans laquelle la rétention sélective des grosses particules permet la consolidation des agglomérats issus de la phase "A" avec leur grossissement préférentiel et le classement qui permet leur sortie pour constituer la production (repère phase 2),
- une phase "E" d'épuisement de la liqueur où la productivité de la liqueur est particulièrement importante à forte concentration de particules fines (repère phase 3).

A noter que selon le volume de suspension à traiter, issue de la phase 1 d'agglomération, l'on peut utiliser selon la capacité des décomposeurs, un seul ou plusieurs décomposeurs classants montés en série et (ou) en parallèle.

**Troisième exemple :** (3 phases - A, CSP, E)

On introduit dans la phase 1, 437 m³/h de liqueur d'aluminate à 70°C, 160 g Na₂O/litre, Rp: 1,13 avec 56 tonnes/heure d'amorce de trihydroxyde d'aluminium provenant de la phase 3, de façon à obtenir une suspension à 120 g/litre d'amorce constituée de particules dont 40 % en poids est inférieur à 48 micrometres. La suspension séjourne 8 heures dans cette première phase d'agglomération et atteint alors 140 g/l de concentration en solides.

Cette suspension est alors introduite dans un étage constitué par 3 décomposeurs classant, identiques à celui décrit dans les exemples 1 et 2, et montés en parallèle. La suspension répartie en 3 flux égaux et maintenue à 65°C séjourne 18 heures dans les décomposeurs. Au cours de cette 2ème phase, les réglages moyens de chaque décomposeur classant sont pour un débit d'alimentation de 462/3 = 154 m³/h de suspension:

- débit de recyclage : 462 m³/h
- vitesse d'écoulement de la suspension en zone de souverse : 7,8 m/h
- vitesse de remontée de la suspension en zone de surverse : 2,1 m/h.

La production classée, extraite en continu et contenant moins de 10 % en poids de particules de dimension inférieure à 48 micrometres, est lavée, alors que la surverse du décomposeur classant alimente la phase 3 qui reçoit le complément d'amorce pour atteindre une concentration de 730 g de solides par litre de suspension. La décomposition se poursuit 16 heures jusqu'à l'obtention d'un Rp = 0,60, l'amorce est alors séparée de la liqueur décomposée.

**Quatrième exemple :** (3 phases - A, CSP, E)

On introduit dans la phase 1 : 194 m³h de liqueur d'aluminate de mêmes caractéristiques que dans l'exemple 3, avec 7,5 t/h d'amorce de trihydroxyde d'aluminium de façon à obtenir une suspension à 38 g/l de concentration en particules solides dont 40 % en poids est inférieure à 48 microns. La suspension séjourne 10 heures dans cette première phase d'agglomération pour atteindre 60 g/l de concentration en solides.

Cette suspension est alors introduite dans un décomposeur classant identique à celui des exemples 1 et 2, où elle séjourne 24 heures à une température de 65°C. Au cours de cette 2ème phase les réglages du décomposeur classant pour un débit d'alimentation de 197 m³/h de suspension :

- débit de recyclage : 591 m³/h
- vitesse d'écoulement de la suspension en zone de souverse : 7,25 m/h
- vitesse de remontée de la suspension en zone de surverse : 1,8 m/h.

La production classée extraite en continu et contenant moins de 8 % en poids de particules de dimension inférieure à 48 microns est lavée alors que le flux de surverse du décomposeur classant contenant encore 20 g/l de particules solides alimente la phase 3 qui reçoit le complément d'amorce pour atteindre une concentration de 750 g/l de solides par litre de suspension. La décomposition se poursuit encore 10 heures jusqu'a Rp = 0,60 environ et l'amorce est alors séparée de la liqueur décomposée.

Les exemples 3 et 4 montrent que l'on obtient une productivité voisine de 85 kg d'Al₂O₃ par mètre cube de liqueur d'aluminate pour une durée globale de décomposition de la liqueur inférieure à 50 heures et que la forte quantité d'amorce fine avec 40 % en poids de particules inférieures à 48 micromètres ne gêne pas l'obtention directe d'une production contenant moins de 10 % en poids de particules inférieures à 48 microns. Aucun autre procédé industriel de production d'alumine ne permet d'atteindre ce résultat sans utiliser en fin de décomposition, un système de classement spécifique toujours onéreux.

Dans un cinquième exemple, le décomposeur classant est mis en oeuvre dans un procédé à 2 phases

EP 0 247 951 B1

suivant lequel la première phase d'agglomération reste inchangée alors que les phases cémentation avec sortie de produit et épuisement sont réalisées en une seule et même étape.

**Cinquième exemple:** (2 phases - A, CSPE)

On introduit dans la phase 1 500 m³/heure de liqueur d'aluminate avec 66 t/h d'amorce de trihydroxyde d'aluminium de mêmes caractéristiques que celles utilisées dans les exemples 3 et 4. La suspension ainsi formée séjourne 8 heures dans cette première phase jusqu'à l'obtention d'une concentration de 150 g/l en solides.

Cette suspension est alors introduite dans un étage constitué de 3 décomposeurs classants identiques à celui décrit dans les exemples 1 et 2 et montés en série, les flux de surverse des 1er et 2ème décomposeurs classants constituant respectivement les flux d'alimentation des 2ème et 3ème décomposeurs. La suspension maintenue à 65° C séjourne au total 42 heures dans les 3 décomposeurs et permet, après cémentation et consolidation des particules d'hydroxyde d'aluminium, d'extraire directement de chaque décomposeur une suspension à au moins 600 g/litre de particules solides constituant la production avec moins de 6 % en poids de particules inférieures à 48 micromètres. Au total 110 m³/h de suspension sont ainsi soutirés, alors que le flux de surverse du dernier décomposeur classant constitué de 440 m³/h de suspension à 150 g de matières sèches par litre est filtré. Le solide contenant 44 % en poids de particules inférieures à 48 micromètres constitue l'amorce introduite dans la phase 1 et la liqueur Rp = 0,60 est recyclée à l'attaque de la bauxite.

Il apparaît que même avec une boucle de décomposition réduite à 2 phases, il est possible de s'affranchir d'un classement en fin de décomposition, tout en conservant une production conforme à la qualité granulométrique requise, une productivité de liqueur supérieure à 80 kg d'$Al_2O_3$ par m³ de liqueur sursaturée pour des durées totales de décomposition n'excédant pas 50 heures.

AVANTAGES PROCURES PAR L'INVENTION

La mise en oeuvre industrielle de l'invention pour la production d'alumine à l'aide du décomposeur classant présente donc de nombreux avantages sous les aspects : qualité de produit, productivité, exploitation et investissement.

a) Qualité de produit : l'invention permet la production industrielle d'alumine à caractéristiques granulométriques spécifiques et ceci par le réglage et le contrôle individuels des paramètres de décomposition que sont les temps de séjour des solides et de la liqueur, en combinaison avec le classement et la sélection des particules selon leur taille dans le décomposeur.

b) Productivité : en l'absence d'agitation, par l'écoulement de type "piston" de la suspension, la cinétique de décomposition est proche de celle d'une réaction méthodique et connue. Par ailleurs, il est possible de régler le temps de séjour de la liqueur de façon relativement homogène dans le décomposeur, la productivité de cette liqueur est alors optimisée.

c) Exploitation : la faible inertie du système réalisé par le décomposeur classant, permet en régime établi de modifier ou de corriger directement un paramètre sans déséquilibrer tout le milieu réactionnel. La puissance nécessaire uniquement pour le pompage du flux de recyclage est sensiblement plus faible (25 à 30 KW) que celle nécessaire au fonctionnement d'un décomposeur agité (40 à 70 KW pour un bac de volume utile de 3000 m³) ou que celle nécessaire à d'autres dispositifs visant les mêmes performances qualitatives mais nécessitant appareils associés.

Enfin, la circulation de la suspension dans l'appareil permet d'éviter toute zone morte, par conséquent inopérante vis-à-vis de la réaction de décomposition, et limite les risques de formation de culots que l'on peut rencontrer avec les décomposeurs agités.

d) Investissement : l'équipement est simplifié et réduit par l'utilisation d'un seul type d'appareil pour remplir plusieurs fonctions des procédés visés.

**Revendications**

1. Procédé de décomposition en continu d'une liqueur d'aluminate de sodium sursaturée en alumine, provenant de l'attaque alcaline de bauxite selon le procédé BAYER, et formant une suspension en présence d'amorce de trihydroxyde d'aluminium, caractérisé par les étapes suivantes :

a) on introduit ladite suspension constituant le flux d'alimentation, à la partie supérieure d'un décomposeur classant non agité, dans une zone de tranquillisation où ce flux d'alimentation est mis en contact, à une température comprise entre 50° et 75° C, avec une fraction d'une suspension à

9

EP 0 247 951 B1

haute concentration en particules solides, constituant le flux de recyclage, prélevée à la partie inférieure du décomposeur classant dans une zone dite de souverse.

b) On soutire simultanément dans la zone de souverse, du décomposeur classant non agité, une autre fraction de suspension à haute concentration en particules solides qui constitue directement le flux de production.

c) On extrait à la partie supérieure du décomposeur classant la suspension à faible concentration en particules solides constituant le flux de surverse.

d) on règle pour un débit préalablement fixé du flux d'alimentation, le débit du flux de recyclage, de telle sorte que :

- le débit de recyclage soit compris entre 2 et 7 fois le débit d'alimentation
- la vitesse d'écoulement de la suspension dans la zone de souverse soit comprise entre 1 mètre et 10 mètres par heure
- la vitesse de remontée de la suspension dans la zone de surverse soit comprise entre 0,5 et 5 mètres par heure.

2. Procédé selon la revendication 1, caractérisé en ce que la concentration en solides du flux d'alimentation est inférieure à 200 g/litre sous forme de trihydroxyde d'aluminium.

3. Procédé selon la revendication 2, caractérisé en ce que la concentration en solides du flux d'alimentation est comprise entre 110 g/litre et 180 g/litre sous forme de trihydroxyde d'aluminium.

4. Procédé selon les revendications 1 à 3, caractérisé en ce que le rapport pondéral Rp des concentrations $Al_2O_3$ soluble/$Na_2O$ caustique dans la solution à décomposer est compris entre 0,5 et 1,2.

5. Procédé selon la revendication 1, caractérisé en ce que la concentration en solides du flux de recyclage est comprise entre 300 g/l et 900 g/l sous forme de trihydroxyde d'aluminium.

6. Procédé selon la revendication 1, caractérisé en ce que le flux de recyclage est compris de préférence entre 2 et 3,5 fois le flux d'alimentation.

7. Procédé selon la revendication 1, caractérisé en ce que la vitesse d'écoulement du flux de suspension dans la zone de souverse du décomposeur classant est comprise de préférence entre 3 mètres/heure et 8 mètres/heure.

8. Procédé selon la revendication 1, caractérisé en ce que la vitesse du flux de surverse dans la zone de surverse du décomposeur classant est comprise de préférence entre 1 mètre par heure et 3 mètres par heure.

9. Dispositif appelé décomposeur classant pour la mise en oeuvre du procédé de décomposition selon l'une quelconque des revendications 1 à 8 comportant un bac (1) cylindro-conique dont la partie inférieure conique (3) située dans une zone (C) dite de souverse est équipée d'une tuyauterie de soutirage (11) et de moyens de cyclage de la suspension de la zone de souverse (C) jusqu'à la partie supérieure (2) du bac (1) caractérisé en ce que cette partie supérieure (2) cylindrique est équipée d'une surverse (4) avec zone d'alimentation et de tranquillisation (B).

10. Décomposeur classant selon la revendication 9, caractérisé en ce que la zone d'alimentation et de tranquillisation (B) est constituée d'une cheminée centrale (5) partiellement immergée dans la suspension à traiter et à l'intérieur de laquelle arrivent la tuyauterie du flux d'alimentation (6) et la tuyauterie du flux de recyclage (8).

11. Décomposeur classant selon revendications 9 et 10, caractérisé en ce qu'il comporte une tôle horizontale (11) ou tout autre dispositif disperseur statique, immergé dans la zone (B) d'alimentation et de tranquillisation à l'intérieur de la cheminée centrale (5) en-dessous des tuyauteries d'arrivée des flux d'alimentation (6) et de recyclage (8) également immergées.

12. Décomposeur classant les revendications 9 à 11, caractérisé en ce que le rapport des volumes des zones de surverse (A) et des zones de souverse (C) est compris entre 0,1 et 0,5.

**13.** Décomposeur classant selon la revendication 9, caractérisé en ce que les moyens de transfert de la suspension prélevée dans la zone de souverse (C) sont externes audit décomposeur classant et constitués par une pompe centrifuge (12) reliée à la tuyauterie de soutirage (10) et refoulant dans la zone d'alimentation et de tranquillisation (B) par l'intermédiaire de la tuyauterie du flux de recyclage (8).

**14.** Décomposeur classant selon la revendication 9, caractérisé en ce que les moyens de transfert de la suspension prélevée dans la zone de souverse (C) sont internes audit décomposeur classant et constitués par une pompe à hélice (13) aspirant la suspension dans la zone de souverse (C) au fond du décomposeur et refoulant dans la zone d'alimentation et de tranquillisation (B) par l'intermédiaire de la tuyauterie du flux de recyclage (8).

**15.** Décomposeur classant selon la revendication 9, caractérisé en ce que la tuyauterie de sortie du flux de production (9) est équipée d'un moyen d'obturation (15).

**Claims**

**1.** A process for continuous decomposition of a liquor of sodium aluminate which is supersaturated in respect of alumina, resulting from the alkaline attack on bauxite using the BAYER process and forming a suspension in the presence of aluminium trihydroxide seeding agent, characterised by the following steps:

a) said suspension constituting the feed flow is introduced in the upper part of a non-agitated grading decomposer, in a tranquilisation zone where said feed flow is brought into contact at a temperature of between 50 and 75°C with a fraction of a suspension with a high level of concentration of solid particles, constituting the recycling flow which is taken off in the lower part of the grading decomposer in a zone referred to as an underflow zone,

b) at the same time another fraction of suspension with a high level of concentration of solid particles which directly constitutes the production flow is drawn off in the underflow zone of the non-agitated grading decomposer,

c) the suspension with a low level of concentration of solid particles constituting the overflow flow is extracted in the upper part of the grading decomposer, and

d) for a previously established flow rate in respect of the feed flow, the flow rate of the recycling flow is regulated in such a way that:
- the recycling flow rate is between 2 and 7 times the feed flow rate,
- the rate of discharge flow of the suspension in the underflow zone is between 1 metre and 10 metres per hour, and
- the speed of rise of the suspension in the overflow zone is between 0.5 and 5 metres per hour.

**2.** A process according to claim 1 characterised in that the concentration of solids in the feed flow is lower than 200 g/litre in the form of aluminium trihydroxide.

**3.** A process according to claim 2 characterised in that the concentration of solids in the feed flow is between 110 g/litre and 180 g/litre in the form of aluminium trihydroxide.

**4.** A process according to claim 1 to 3 characterised in that the weight ratio WR of the concentrations of soluble $Al_2O_3$ /caustic $Na_2O$ in the solution to be decomposed is between 0.5 and 1.2.

**5.** A process according to claim 1 characterised in that the concentration of solids in the recycling flow is between 300 g/l and 900 g/l in the form of aluminium trihydroxide.

**6.** A process according to claim 1 characterised in that the recycling flow is preferably between 2 and 3.5 times the feed flow.

**7.** A process according to claim 1 characterised in that the speed of discharge flow of suspension in the underflow zone of the grading decomposer is preferably between 3 metres/hour and 8 metres/hour.

**8.** A process according to claim 1 characterised in that the speed of the overflow flow in the overflow zone of the grading decomposer is preferably between 1 metre per hour and 3 metres per hour.

9. An apparatus referred to as a grading decomposer for carrying out the decomposition process according to any one of claims 1 to 8, comprising a cylindrical-conical tank (1) of which the lower conical part (3) disposed in a zone (C) referred to as an underflow zone is provided with a draw-off conduit (11) and means for cycling of the suspension from the underflow zone (C) to the upper part (2) of the tank (1), characterised in that said upper cylindrical part (2) is provided with an overflow (4) with a feed and tranquilisation zone (B).

10. A grading decomposer according to claim 9 characterised in that the feed and tranquilisation zone (B) is formed by a central shaft (5) partially immersed in the suspension to be treated and within which the conduit for the feed flow (6) and the conduit for the recycling flow (8) arrive.

11. A grading decomposer according to claims 9 and 10 characterised in that it comprises a horizontal plate (11) or any other static disperser device which is immersed in the feed and tranquilisation zone (B) within the central shaft (5) below the conduits for the introduction of the feed flow (6) and the recycling flow (8) which are also immersed.

12. A grading decomposer according to claims 9 to 11 characterised in that the ratio of the volumes of the overflow zones (A) and the underflow zones (C) is between 0.1 and 0.5.

13. A grading decomposer according to claim 9 characterised in that the means for transfer of the suspension which is taken off in the underflow zone (C) are external to said grading decomposer and are formed by a centrifugal pump (12) connected to the draw-off conduit (10) and discharging into the feed and tranquilisation zone (B) by way of the recycling flow conduit (8).

14. A grading decomposer according to claim 9 characterised in that the means for transfer of the suspension taken off in the underflow zone (C) are internal to said grading decomposer and are formed by a screw pump (13) which takes in the suspension in the underflow zone (C) at the bottom of the decomposer and discharges it into the feed and tranquilisation zone (B) by way of the recycling flow conduit (8).

15. A grading decomposer according to claim 9 characterised in that the conduit for the discharge of the production flow (9) is provided with a shut-off means (15).

**Patentansprüche**

1. Verfahren zur kontinuierlichen Zersetzung einer an Aluminiumoxid übersättigten Natriumaluminatlösung, die aus dem alkalischen Aufschluß von Bauxit nach dem Bayer-Verfahren stammt und eine Suspension in Gegenwart eines Aluminiumtrihydroxidimpfmittels bildet,

**gekennzeichnet** durch folgende Schritte:

a) Einführung dieser, den Zufuhrstrom bildenden Suspension am oberen Teil eines nicht gerührten Klassier-Zersetzers in eine Beruhigungszone, in der dieser Zufuhrstrom bei einer Temperatur von 50 bis 75 °C mit einer Fraktion einer Suspension mit hoher Konzentration an festen Teilchen, die den Rückführstrom bildet und die am unteren Teil des Klassier-Zersetzers in einer sog. Ablaufzone entnommen wird, in Kontakt gebracht wird;
b) gleichzeitiges Abziehen einer anderen Suspensionsfraktion mit hoher Konzentration an festen Teilchen, die direkt den Produktionsstrom bildet, in der Ablaufzone des nicht gerührten Klassier-Zersetzers;
c) Abführung der Suspension mit geringer Konzentration an festen Teilchen, die den Überlaufstrom bildet, am oberen Teil des Klassier-Zersetzers;
d) Regelung des Durchsatzes des Rückführstroms, um einen vorher festgelegten Durchsatz des Zufuhrstroms zu erhalten, auf die Weise, daß:
  - der Rückführdurchsatz ein Zwei- bis Siebenfaches des Zufuhrdurchsatzes beträgt,
  - die Strömungsgeschwindigkeit der Suspension in der Ablaufzone 1 bis 10 m/h beträgt,
  - die Anstiegsgeschwindigkeit der Suspension in der Überlaufzone 0,5 bis 5 m/h beträgt.

2. Verfahren nach Anspruch 1, dadurch gekennzeichnet, daß die Konzentration des Zufuhrstroms an Feststoffen, in Form von Aluminiumtrihydroxid, kleiner als 200 g/l ist.

3. Verfahren nach Anspruch 2, dadurch gekennzeichnet, daß die Konzentration des Zufuhrstroms an Feststoffen, in Form von Aluminiumtrihydroxid, 110 bis 180 g/l beträgt.

4. Verfahren nach den Ansprüchen 1 bis 3, dadurch gekennzeichnet, daß das Gewichtsverhältnis Rp der Konzentrationen $Al_2O_3$ (löslich) / $Na_2O$ (kaustisch) in der zu zersetzenden Lösung 0,5 bis 1,2 beträgt.

5. Verfahren nach Anspruch 1, dadurch gekennzeichnet, daß die Konzentration des Rückführstroms an Feststoffen, in Form von Aluminiumtrihydroxid, 300 bis 900 g/l beträgt.

6. Verfahren nach Anspruch 1, dadurch gekennzeichnet, daß der Rückführstrom vorzugsweise ein 2 bis 3,5-faches des Zufuhrstroms beträgt.

7. Verfahren nach Anspruch 1, dadurch gekennzeichnet, daß die Strömungsgeschwindigkeit des Suspensionsstroms in der Ablaufzone des Klassier-Zersetzers vorzugsweise 3 bis 8 m/h beträgt.

8. Verfahren nach Anspruch 1, dadurch gekennzeichnet, daß die Geschwindigkeit des Überlaufstroms in der Überlaufzone des Klassier-Zersetzers vorzugsweise 1 bis 3 m/h beträgt.

9. Klassier-Zersetzer genannte Vorrichtung zur Durchführung des Zersetzungsverfahrens nach einem der Ansprüche 1 bis 8, die einen zylindrisch-konischen Behälter (1) enthält, dessen unterer konischer Teil (3) sich in einer sog. Ablaufzone (C) befindet und mit einem Abflußröhrensystem (11) und Mitteln zur Kreisführung der Suspension der Ablaufzone (C) bis zum oberen Teil (2) des Behälters (1) ausgestattet ist, dadurch gekennzeichnet, daß dieser obere zylindrische Teil (2) mit einem Überlauf (4) mit einer Zufuhr- und Beruhigungszone (B) ausgestattet ist.

10. Klassier-Zersetzer nach Anspruch 9, dadurch gekennzeichnet, daß die Zufuhr- und Beruhigungszone (B) aus einem zentralen Kamin (5) besteht, der teilweise in die zu behandelnde Suspension eingetaucht ist und in dessen Inneren das Röhrensystem des Zufuhrstroms (6) und das Röhrensystem des Rückführstroms (8) einmünden.

11. Klassier-Zersetzer nach den Ansprüchen 9 und 10, dadurch gekennzeichnet, daß er eine horizontale Platte (11) oder jede andere statische Dispergiervorrichtung enthält, die in die Zufuhr- und Beruhigungszone (B) im Inneren des zentralen Kamins (5) unterhalb der Einmündungsröhrenysteme der Zufuhr- (6) und der Rückführströme (8), die gleichmäßig eingetaucht sind, eintaucht.

12. Klassier-Zersetzer nach den Ansprüchen 9 bis 11, dadurch gekennzeichnet, daß das Verhältnis der Volumina der Überlaufzonen (A) und der Ablaufzonen (C) 0,1 bis 0,5 beträgt.

13. Klassier-Zersetzer nach Anspruch 9, dadurch gekennzeichnet, daß die Fördermittel der in der Ablaufzone (C) entnommenen Suspension außerhalb des Klassier-Zersetzers sind und aus einer Kreiselpumpe (12) gebildet werden, die an das Abflußröhrensystem (10) angeschlossen ist und in die Zufuhr- und Beruhigungszone (B) durch das Zwischenstück des Röhrensystems des Rückführstroms (8) fördert.

14. Klassier-Zersetzer nach Anspruch 9, dadurch gekennzeichnet, daß die Fördermittel der in der Ablaufzone (C) entnommenen Suspension innerhalb des Klassier-Abscheiders sind und aus einer Schneckenpumpe (13) gebildet werden, die die Suspension in der Ablaufzone (C) am Boden des Zersetzers ansaugt und in die Zufuhr- und Beruhigungszone (B) durch das Zwischenstück des Röhrensystems des Rückführstroms (8) fördert.

15. Klassier-Zersetzer nach Anspruch 9, dadurch gekennzeichnet, daß das Röhrensystem des Ausgangs des Produktionsstroms (9) mit einem Verschlußmittel (15) ausgestattet ist.

zone de surverse

B

A

D

C

FIG.1

FIG.2

aluminate　　　　　　　　　　　amorce　　　　　　　　　　　　　liqueur
décomposée

70°

séparation de
l'amorce

amorce

65°

50°

sortie production

phase 1　　　　　　　　　phase 2　　　　　　　　phase 3

agglomération　　　　　cementation　　　épuisement liqueur

en décomposeurs classants
non agités

FIG.3

EP 0 247 951 B1